# EUROPEAN PATENT SPECIFICATION

(11) **EP 3 180 101 B1**
(45) Date of publication and mention of the grant of the patent: **29.04.2020**
(21) Application number: 15831831.1
(22) Date of filing: 13.08.2015
(51) Int. Cl.: B01D 33/48, B01D 33/50, B01D 33/46, B01D 33/04

(54) **LOW ENERGY CONSUMPTION BELT FILTER CLEANING SYSTEM**
BANDFILTERREINIGUNGSSYSTEM MIT GERINGEM ENERGIEVERBRAUCH
SYSTÈME DE NETTOYAGE DE FILTRE À BANDE À FAIBLE CONSOMMATION D'ÉNERGIE

(30) Priority: 13.08.2014 US 201462036995 P
(43) Date of publication of application: 21.06.2017
(73) Proprietor: Trojan Technologies, London, ON N5V 4T7 (CA)
(72) Inventor: SANDVIK, Kai Viggo, 7801 Namsos (NO); LYNG, Tor Olav, 7810 Namsos (NO); KEZELE, Dusko Antonio, London, Ontario N6H 5E8 (CA)
(74) Representative: Sandri, Sandro
(86) International application number: PCT/CA2015/050765
(87) International publication number: WO 2016/023124

(56) References cited:
- DE-A1- 2 834 497
- FR-A- 1 352 960
- FR-A- 1 352 960
- US-A- 4 206 876
- US-A- 4 347 805
- US-A- 4 515 313
- US-A1- 2003 094 515
- US-A1- 2003 094 515
- US-A1- 2010 120 350
- US-A1- 2010 120 350
- US-A1- 2010 163 480
- US-A1- 2014 339 322

## Description

### FIELD OF THE INVENTION

The present invention relates to a cleaning device for belt filters. In particular, the present invention relates to a low-energy consumption cleaning device for backwashing belt filters. Other aspects of the invention will become apparent to those of skill in the art upon reviewing the present specification.

### DESCRIPTION OF THE PRIOR ART

Endless or continuous filter devices are subject to clogging by filtered material remaining on the surface of the belt and in holes of the filter material. Effective removal of the surface and embedded debris is required to maintain the filter throughput and reduce cleaning and maintenance requirements.

United States patent 4,830,750 [Jandourek et al. (Jandourek)] discloses a device that uses air blow from the underside of the filtering band to lift water and particles from the band and direct the water back to the band. This device is not capable of giving any satisfactory operation in cleaning plants of interest herein - i.e., cleaning of municipal waste water.

International Publication Number WO 87/02595 [Ericksson] describes blowing pressurized air or water from above towards a filtering belt and collecting the residue in a collecting chute. This form of residue removal has not been effective. Air blowing in this way is at best suitable for removal of dry filtrate not containing fat or similar compounds.

United States patent 4,921,608 [Lee] purports to address this problem by spraying hot water vapour. This approach is costly from both equipment and energy consumption viewpoint.

International Publication Number WO 1994/26387[Fosseng] describes a cleaning device having an endless filtering belt carried through a waste water container for filtering of waste water, wherein the filtering band is carried over numerous rollers in such a way that it, in a certain area runs substantially horizontally with the residue turned downwards. Within this area there is a rod shaped exhaust or blowoff device to effect an air blow towards the filtering belt. A blowoff device is arranged in parallel with the blowoff device and downstream to spray water jets towards the filtering band. This cleaning device has several weaknesses with regard to the cooperation between its separate modules. An example of the latter is causing the blowoff device, which has a particularly high energy demands to achieve satisfactory tearing-off effect. Moreover, the device has been subject to clogging because of particles moved into the blowing aperture.

United States patent 6,942,786 [Fosseng] describes a blow-off device for the removal of debris. This design effectively removes debris and limits the addition of water to the waste stream, while not effecting wear on the filter material.

Document DE-A_2834497 discloses a vibratory separator which is used for the preliminary cleaning of effluents with a high proportion of sludge includes a perforated endless belt conveyor. The belt is cleaned through a cleaning unit comprising a longitudinal tube connected to a source of pressurized air which is directed towards the belt through a slot.

Document FR-A-920848 discloses an automatic apparatus for the depuration of water charged with glueing materials provided with a belt conveyor that is cleaned by means of a cleaning unit comprising a pair of opposed and sloped flat surfaces defining a slot and a source of pressurized air directing a flow of air through said slot.

### SUMMARY OF THE INVENTION

It is an object of the present invention to obviate or mitigate at least one of the above-mentioned disadvantages of the prior art.

It is another object of the present invention to provide a novel fluid outlet nozzle configured to be connectable to a blow-off device.

It is another object of the present invention to provide a novel method of cleaning a belt using a blow-off device.

Accordingly, in one of its aspects, the present invention provides a fluid outlet nozzle having the features disclosed in claim 1.

In another of its aspects, the present invention provides a method of cleaning a belt using a blow-off device comprising a housing having an outer surface and a streamlined inner surface, the method comprising the steps disclosed at claim 13.

Thus, the present inventors have developed a blow-off device with a streamlined interior surface to address the issue of frictional and pressure losses in blow-off devices known in the art. The resulting design provides improved cleaning efficacy and efficiency. Reduced pressure drop over the length of the device, reduced frictional losses and increased outlet velocity are believed to result in increase efficiency by providing equal or improved performance at a lower inlet fluid pressure, which reduces the power requirement of the device used to deliver the fluid to the blow-off device.

The present inventors have further developed a blow-off device and fluid outlet nozzle for a blow-off device which improves the energy efficiency of a blow-off device by streamlining the inner surfaces of the device or nozzle. The inner surfaces of the device or nozzle are constructed of a continuously curving surface. Advantages associated with the streamlined internal design include reduced hydraulic resistance, increased flow rate through the fluid outlet with the same inlet pressure, increased effective length of the exit fluid jet, increased power of the exit fluid jet and a reduction of blower power required to achieve comparable or improved performance compared to the device taught by United States patent 6,942,786 [Fosseng] described above.

The present inventors have further developed, in a preferred embodiment, a device and method of adjusting the fluid outlet gap. Preferably, one or more adjustment screws along the sides of the fluid outlet nozzle allow the fluid outlet gap to be adjusted after manufacturing to ensure that the gap is consistent along the length of the device, or to control flow volume and pressure, contributing to efficiency and effectiveness of the device. The preferred design of the blow-off device including the fluid outlet nozzle and adjustable gap also allows for the removal of additional structural elements and obstacles to fluid flow compared to the device taught by United States patent 6,942,786 [Fosseng] described above.

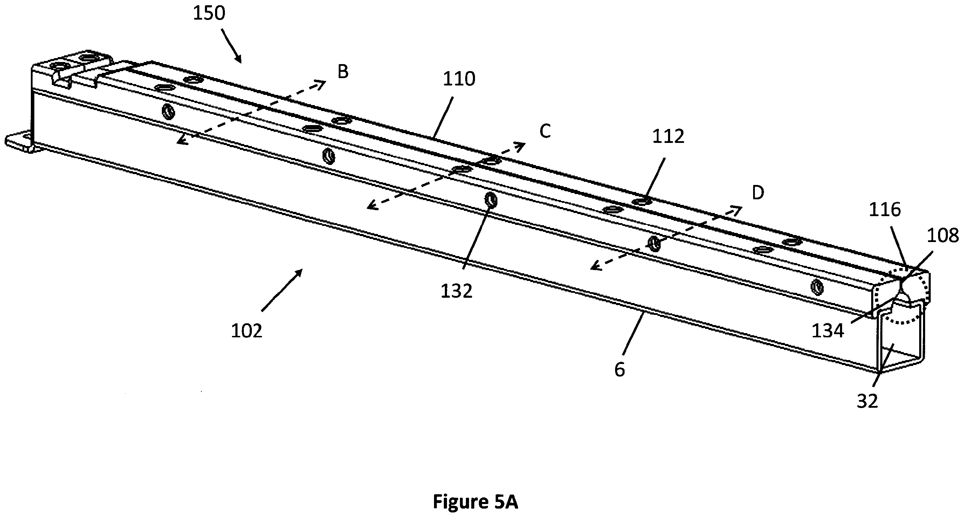

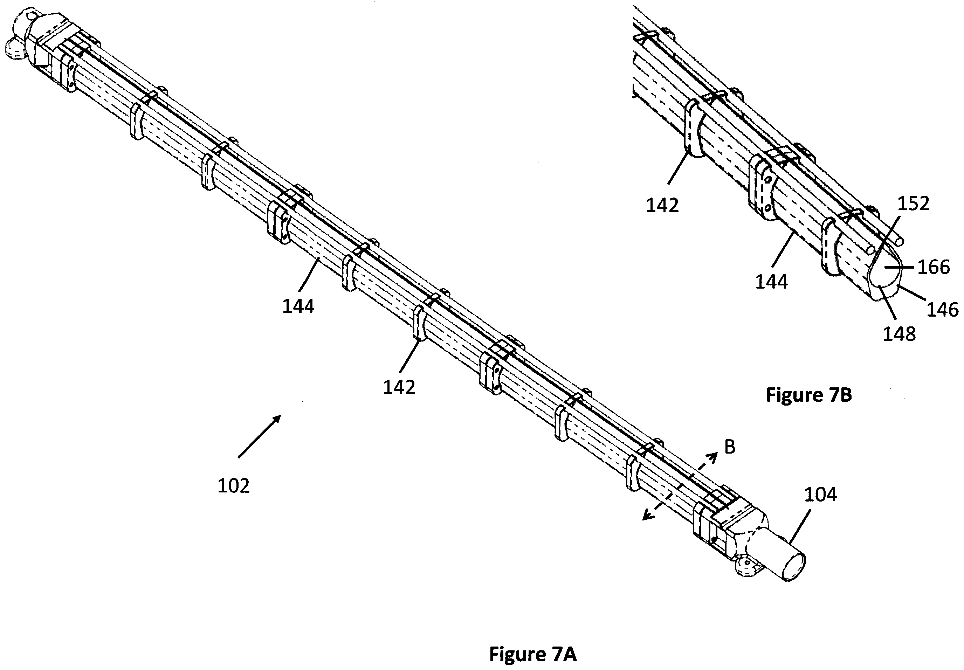

As will be appreciated by those of skill in the art, it is an important feature of the present blow-off device that the fluid outlet nozzle comprises a cross-sectional shape that is "streamlined". By this is meant that the cross-sectional shape of the fluid outlet nozzle is free of angles (particularly right angles). In a first preferred embodiment, the cross-sectional shape of the fluid outlet nozzle is substantially in the shape of a teardrop - see, for example, Figures 7A and 7B. In a second preferred embodiment, the cross-sectional shap of the fluid outlet nozzle is substantially in the shape of an ogee arch (i.e., an arch having substantially identical undulating (preferably S-shaped) haunches which converge together to form a point-like, tapering acumination) - see, for example, Figures 5A-5C.

Other advantages of the invention will become apparent to those of skill in the art upon reviewing the present specification.

### BRIEF DESCRIPTION OF THE DRAWINGS

Embodiments of the present invention will be described with reference to the accompanying drawings, wherein like reference numerals denote like parts, and in which:
Figure 1A is a perspective view of a blow-off device known in the art;
Figure 1B is a perspective view of the known blow-off device of Figure 1A sectioned at line B;
Figure 2 is a perspective view of the known blow-off device of Figure 1 with the nozzle assembly removed;
Figure 3 is a cross-sectional view taken at line 3' of the known blow-off device of Figure 1A;
Figure 4A is a perspective view of a blow-off device known in the prior art with the fluid outlet nozzle assembly cut-away to show the underlying support structure;
Figure 4B shows the device defined in Figure 4A with a view from the fluid conduit side towards the fluid outlet nozzle;
Figure 5A is a perspective view of a blow-off device with a streamlined fluid outlet nozzle, in accordance with an embodiment of the present invention;
Figure 5B is a cross-sectional view at line B of Figure 5A;
Figure 5C is a cross sectional view at line C of Figure 5A;
Figure 5D is a cross sectional view at line D of Figure 5A;
Figure 6A is a close-up perspective view of the nozzle outlet profile of the blow-off device of Figure 5A;
Figure 6B is a cross-sectional view of the face of the blow-off device of Figure 6A;
Figure 6C is a perspective view of a blow-off device showing the positioning of an adjustment screw, according to an embodiment of the present invention;
Figure 6D is a cross-sectional view of the face of the blow-off device of Figure 6C;
Figure 6E is a perspective view of a blow-off device showing an adjustment screw and corresponding stop bolt, according to an embodiment of the present invention;
Figure 6F is a cross-sectional view of the face of the blow-off device of Figure 6E;
Figure 6G is a perspective view of a blow-off device showing the positioning of assembly screws, according to an embodiment of the invention;
Figure 7A is a perspective view of a blow-off device having a fluid conduit and fluid outlet nozzle combined in a single housing with a streamlined inner surface, according to an embodiment of the present invention;
Figure 7B is a perspective view of the blow-off device of Figure 7A sectioned at line B;
Figure 8A is a perspective view of the components of a blow-off device having a fluid conduit and fluid outlet nozzle combined in a single housing with a streamlined inner surface, according to an embodiment of the present invention;
Figure 8B is a side view of the assembled blow-off device of Figure 8A from the perspective of arrow B;
Figure 8C is a cross-sectional view at line C of Figure 8B;
Figure 8D is a cross-sectional view at line D of Figure 8B;
Figure 9A illustrates the computational fluid dynamics (CFD)-modelled 3D fluid flow trajectories along the length of a blow-off device known in the art;
Figure 9B illustrates a cross-sectional view of the fluid velocity profile of Figure 9A;
Figure 10A illustrates the CFD-modelled 3D fluid flow trajectories along the length of a blow-off device having a streamlined fluid outlet nozzle according to an embodiment of the present invention;
Figure 10B illustrates a cross-sectional view of the fluid velocity profile of Figure 10A;
Figure 11A illustrates the CFD-modelled 3D fluid flow trajectories along the length of a blow-off device having a fluid conduit and fluid outlet nozzle combined in a single housing with a streamlined inner surface, according to an embodiment of the present invention; and
Figure 11B illustrates a cross-sectional view of the fluid velocity profile of Figure 11A.

### DETAILED DESCRIPTION OF THE PREFERRED EMBODIMENTS

In one of its aspects, the present invention relates to a fluid outlet nozzle connectable to a conduit of a blow-off device for cleaning a belt filter, the nozzle comprising a housing having an inner surface and outer surface, wherein the inner surface defines a fluid entry zone to receive fluid into the nozzle and an elongated gap for directing fluid towards the belt, and wherein the inner surface is streamlined to facilitate flow of the fluid into the gap. Preferred embodiments of this fluit outlet nozzle may include any one or a combination of any two or more of any of the following features:
- the housing is bipartite;
- the inner surface has a concave portion and a convex portion;
- the width of the gap is adjustable;
- the adjustment comprises narrowing the width of the gap;
- the adjustment comprises widening the width of the gap;
- an adjustment screw is used to adjust the width of the gap;
- the width of the gap is in the range of 0.2 mm to 1.0 mm;
- the width of the gap is in the range of 0.3 mm to 0.7 mm;
- the width of the gap is in the range of 0.4 mm to 0.5 mm;
- the width of the gap is 0.45 mm;
- the nozzle is produced by forming, injection moulding or machining;
- the nozzle is constructed of metal, composite, plastic, or a combination thereof;
- the nozzle is coupled to a conduit of a blow-off device for cleaning a belt filter;
- the conduit comprises one or more fluid inlets which receive pressurized fluid from a fluid source;
- the fluid is water or air;
- the fluid is a combination of air and water;
- the fluid is a detergent solution;
- the one or more fluid inlets are positioned at a first end of the conduit;
- the one or more fluid inlets are positioned at a first end and a second end of the conduit;
- the one or more fluid inlets are positioned between a first end and a second end of the conduit;
- the conduit varies in cross-sectional area between a first end and a second end of the conduit;
- the direction of the flow of fluid as the fluid exits the elongated gap defines an axis, and, wherein the inner surface on one side of the axis is a mirror image of the inner surface on the other side of the axis; and/or
- the nozzle is used to clean a belt filter, preferably a continuous belt filter.

In another of its aspects, the present invention relates to a blow-off device for cleaning a belt filter, the device comprising a housing connectable to a fluid source and having an inner and outer surface, the housing defining a conduit for transporting the fluid within a channel, wherein the inner surface defines a surface of the channel and an elongated gap for directing the fluid towards the belt, and wherein the inner surface is streamlined to facilitate flow of the fluid into the gap. Preferred embodiments of this blow-off device may include any one or a combination of any two or more of any of the following features:
- a cross-section of the housing is teardrop shaped;
- the width of the gap is adjustable;
- the adjustment comprises narrowing the width of the gap;
- the adjustment comprises widening the width of the gap;
- an adjustment screw is used to adjust the width of the gap;
- the width of the gap is in the range of 0.2 mm to 1.0 mm;
- the width of the gap is in the range of 0.3 mm to 0.7 mm;
- the width of the gap is in the range of 0.4 mm to 0.5 mm;
- the width of the gap is 0.45 mm;
- the blow-off device isconstructed of metal, composite, plastic or a combination thereof;
- the conduit comprises one or more fluid inlets which receive pressurized fluid from a fluid source;
- the fluid is water or air;
- the fluid is a combination of air and water;
- the fluid is a detergent solution;
- the one or more fluid inlets are positioned at a first end of the conduit;
- the one or more fluid inlets are positioned at a first end and a second end of the conduit;
- the one or more fluid inlets are positioned between a first end and a second end of the conduit;
- the conduit varies in cross-sectional area between a first end and a second end of the conduit;
- the direction of the flow of fluid as the fluid exits the elongated gap defines an axis, and, wherein the inner surface on one side of the axis is a mirror image of the inner surface on the other side of the axis;
- the housing is bipartite; and/or
- the blow-off device is used to clean a belt filter.

In another of its aspects, the present invention relates to a method of cleaning a belt using a blow-off device comprising a housing having an outer surface and a streamlined inner surface, the method comprising: receiving pressurized fluid into a channel defined by a conduit of the blow-off device; moving the fluid past the streamlined inner surface; and ejecting the fluid towards the belt from an elongated gap defined by the streamlined inner surface. Preferred embodiments of this method may include any one or a combination of any two or more of any of the following features:
- the streamlined inner surface is inside of a housing of a fluid outlet nozzle;
- the streamlined inner surface defines a fluid entry zone;
- the step of moving the fluid comprises moving the fluid through the fluid entry zone;
- the streamlined inner surface is the surface of the conduit defining the channel;
- the housing is bipartite;
- the width of the gap is adjustable;
- the adjustment comprises narrowing the width of the gap;
- the adjustment comprises widening the width of the gap;
- an adjustment screw is used to adjust the width of the gap;
- the width of the gap is in the range of 0.2 mm to 1.0 mm;
- the width of the gap is in the range of 0.3 mm to 0.7 mm;
- the width of the gap is in the range of 0.4 mm to 0.5 mm;
- the width of the gap is 0.45 mm;
- the blow-off device is constructed of metal, composite, plastic, or a combination thereof;
- the pressurized fluid is received into the conduit from a fluid source via one or more fluid inlets;
- the fluid is water or air;
- the fluid is a combination of air and water;
- the fluid is a detergent solution;
- the one or more fluid inlets are positioned at a first end of the conduit;
- the one or more fluid inlets are positioned at a first end and a second end of the conduit;
- the one or more fluid inlets are positioned between a first end and a second end of the conduit;
- the conduit varies in cross-sectional area between a first end and a second end of the conduit; and/or
- the direction of the flow of fluid as the fluid exits the elongated gap defines an axis, and, wherein the inner surface on one side of the axis is a mirror image of the inner surface on the other side of the axis.

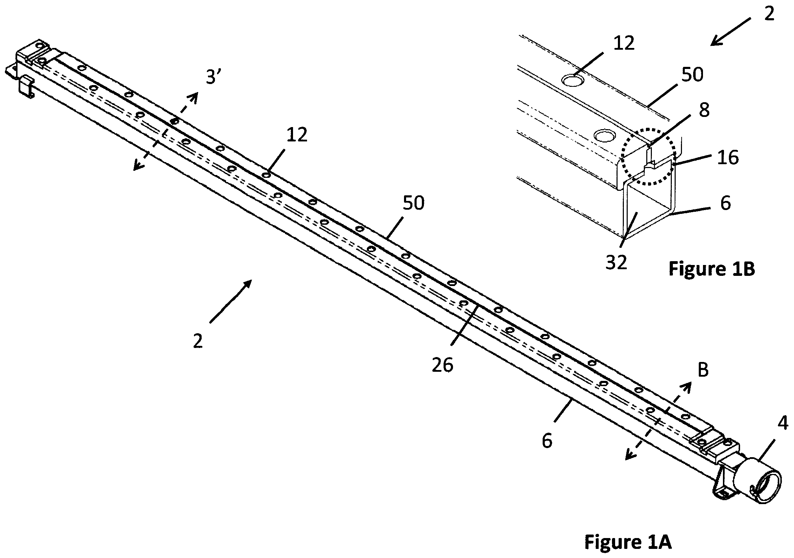

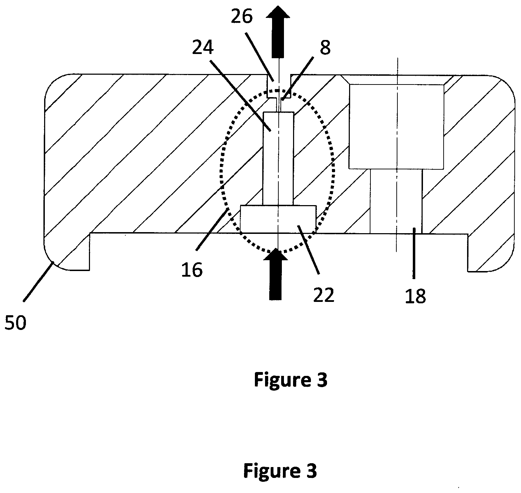

Referring to Figure 1A, shown is a blow-off device 2 according to a design known in the art. Fluid enters through the fluid inlet 4, flows through a channel 32 in the fluid conduit 6, and is dispelled through the fluid outlet gap 8 and the nozzle outlet 26 (see Figure 3). The fluid outlet nozzle 50 is secured to the fluid conduit 6 by means of assembly screws 12. Figure 1B depicts the internal profile of the fluid conduit 6 and fluid outlet nozzle 50, showing that the fluid outlet gap 8 is angular in construction.

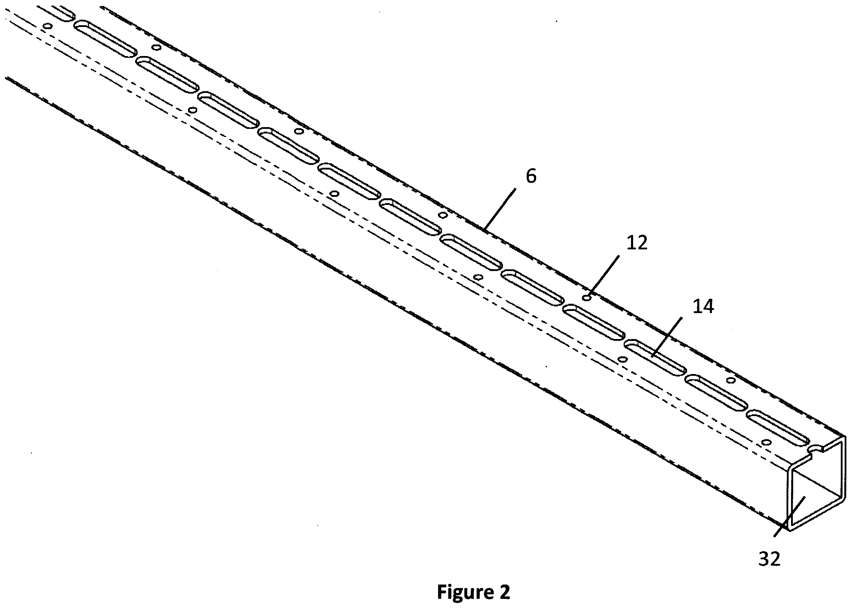

Figure 2 illustrates the known blow-off device 2 of Figure 1 with the fluid outlet nozzle 50 removed, exposing the underlying surface of the fluid conduit 6. Formed in the surface of the conduit 6 are slots 14, which in the intact blow-off device 2 allow fluid to flow out from the channel 32 of the conduit 6 and into the fluid outlet nozzle 50.

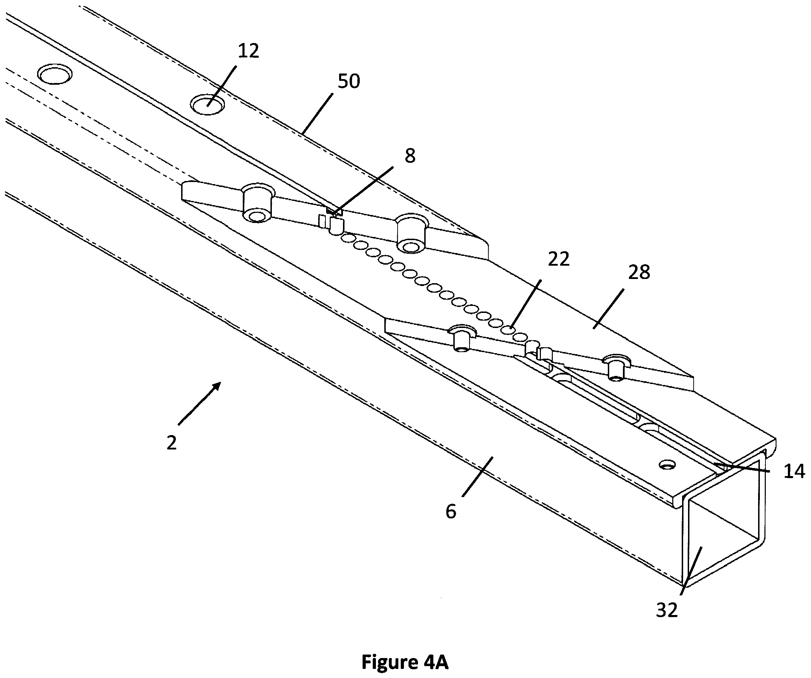

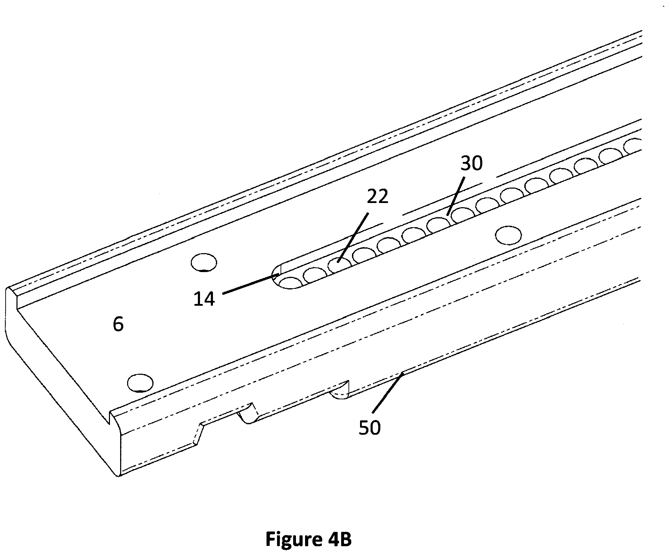

Figure 3 shows a cross-section of a fluid outlet nozzle 50 known in the art. The direction of fluid flow from the fluid conduit 6 through the fluid outlet nozzle 50 is indicated by the arrows. A pore 16 extending transversely through the fluid outlet nozzle comprises an entry cavity 22, a tunnel 24, the fluid outlet gap 8, and the nozzle outlet 26. The outlet profile of pore 16 shows that the internal surfaces of pore 16 in contact with the fluid are not streamlined but instead have sharp transitions (i.e., the transition between entry cavity 22 and tunnel 24; tunnel 24 and fluid outlet gap 8; and fluid outlet gap 8 and nozzle outlet 26). Of particular note is the entry cavity 22 which is defined by a structural element required adjacent to fluid conduit 6 (not shown in Figure 3) to maintain the spacing of the fluid outlet gap 8. This structural element is shown more clearly in Figure 4. Also shown is a counter-sink 18 for an assembly screw 12.

Figure 4A details the layered structure of the fluid outlet nozzle known in the art. This view shows that the circular entry cavities 22 are formed in a supporting structure 28 as a series of perforations, where each entry cavity 22 is separated by a rib 30 (visible in Figure 4B). The ribs 30 separating each entry cavity 22 are essential to fluid outlet nozzles 50 known in the art, and are structural elements required to maintain the fluid outlet gap 8. Figure 4B illustrates the configuration of the entry cavities 22 and ribs 30 of the fluid outlet nozzle 50 relative to a slot 14 of the fluid conduit 6. As will be understood by those of skill in the art, Figure 4B shows the fluid flow path looking out from the inside of the fluid conduit 6 (not shown for clarity) - i.e., fluid flow is into the page.

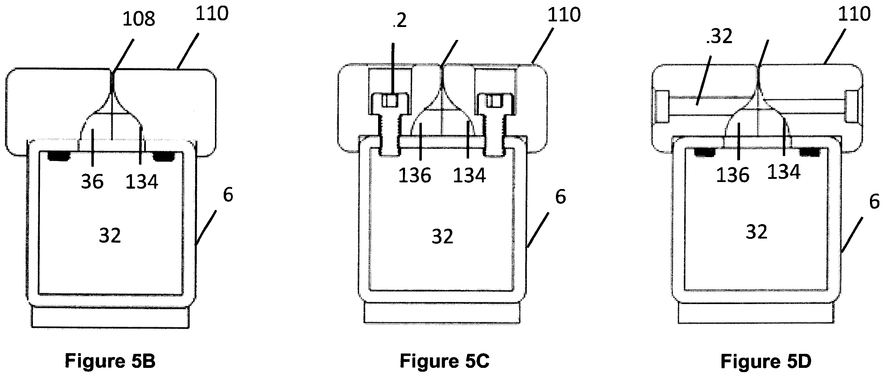

Referring to Figure 5A, shown is one embodiment of an improved blow-off device 102 with a streamlined fluid outlet nozzle 150. The fluid outlet nozzle 150 comprises a housing 110 attached to a rectangular profiled fluid conduit (e.g.,fluid conduit 6). The inner surface 134 of the housing 110 of the fluid outlet nozzle 150 is streamlined to form a continuous curve on each side of the fluid outlet gap 108 (see outlet profile 116). This creates a streamlined effect resulting in several advantages over a non-streamlined design, including improved cleaning (e.g.,using backwasing), reduced pressure drop over the length of the device, reduced frictional losses, and increased outlet velocity. Collectively these features increase efficiency by providing equal or improved performance at a lower inlet fluid velocity, which reduces the power requirement of the device (not shown) used to deliver the fluid to the blow-off device 102. Also shown in Figure 5 are assembly screws 112 to couple the housing 110 to the fluid conduit 6 and gap adjustment screws 132 to allow adjustment of the width of the fluid outlet gap 108.

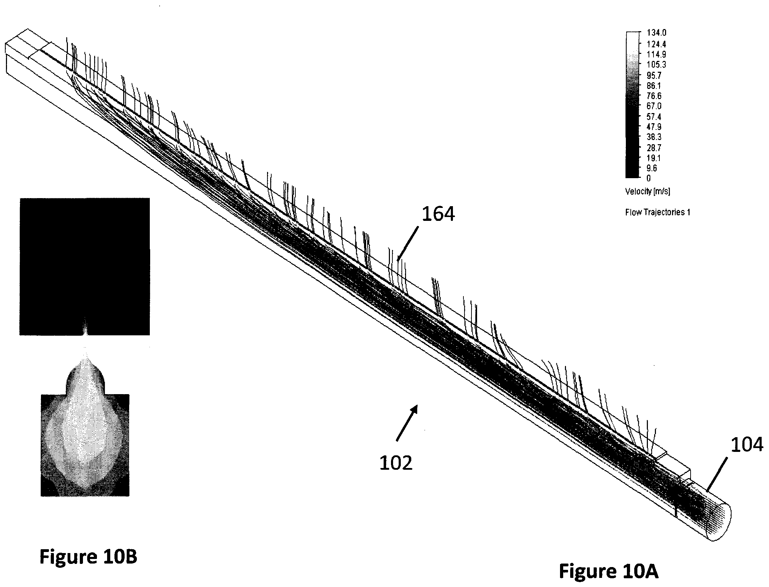

The blow-off device 102 can be constructed of metal, composite, plastic, or a combination thereof. The blow-off device 102 can utilize a fluid conduit known in the art such as rectangular fluid conduit 6. Although the drawings depict the fluid conduit as of a uniform cross-sectional area along its length, the cross-sectional area may vary. The channel 32 of the fluid conduit can be connected via a fluid inlet (e.g., fluid inlet 104 - see Figure 10A) to a pressurized fluid source (not shown) which may be engaged to release fluid into the channel 32 of the fluid conduit 6 for use in cleaning a belt filter (e.g., backwashing an endless filtering belt for filtering waste water). The fluid inlet can be provided at one end of the blow-off device 102 (as in Figure 10), at either end of the blow-off device 102, or between the ends of the device 102. The fluid can be of various types including air, water, a detergent solution, or a combination thereof.

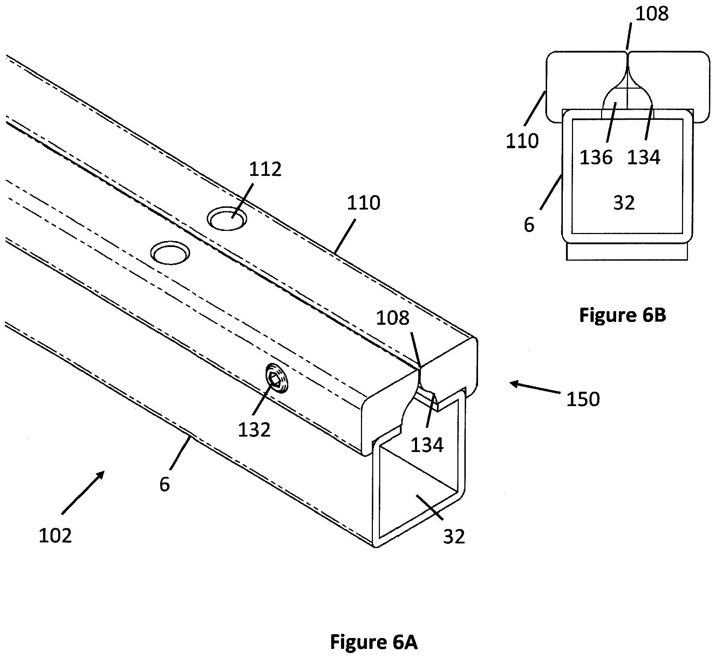

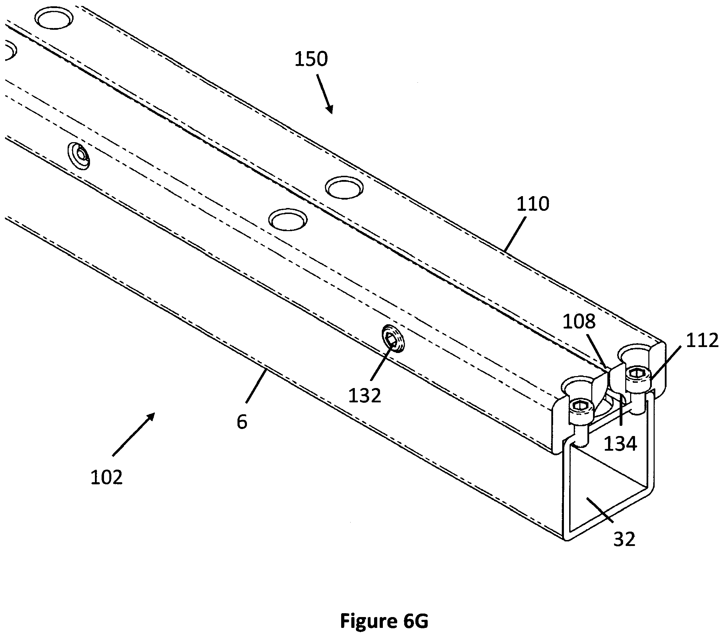

The fluid outlet nozzle 150 may be formed, injection moulded or machined. It can be coupled to the fluid conduit 6 by any of various means known to a person skilled in the art. For example, Figures 5B and 6G show assembly screws 112 used to attach the housing 110 of the fluid outlet nozzle 150 to the fluid conduit 6. The housing 110 of the fluid outlet nozzle 150 may be bipartite comprising two complementary halves each having a streamlined inner surface 134. When the two halves of the housing 110 are secured (e.g., using assembly screws 112) to the fluid conduit 6 the inner surfaces 134 cooperate to form the fluid entry zone 136 and the fluid outlet gap 108. In other embodiments the fluid outlet nozzle 150 may be fused to the edges of the fluid conduit (e.g., fluid conduit 6) or the fluid conduit and the fluid outlet nozzle may be integral to form a single housing 144 for fluid flow and dispersal (see e.g., Figures 7-8).

As can be seen in Figures 5 to 6, the inner surface 134 of the housing 110 defines a fluid entry zone 136 which receives fluid from the fluid conduit (e.g., fluid conduit 6) that in turn receives the fluid from a pressurized fluid source (not shown). The inner surface 134 of the fluid outlet nozzle 150 is streamlined, or continuously curved, to facilitate the flow of fluid from the fluid entry zone 136 into the fluid outlet gap 108. Figures 5B and 6B illustrate cross-sections of embodiments of the streamlined inner surface 134 defining the fluid entry zone 136 and fluid outlet gap 108. Each half of the streamlined inner surface 134 is composed of two roughly equidistant concave and convex portions. In other embodiments each half of the inner surface 134 may have multiple concave or convex portions, or the concave and convex portions may be of different lengths. Alternatively, each half of the inner surface 134 may define a single convex surface. Typically the shape of the inner surface 136 is the same on either side of the gap, such that the two halves of the inner surface 136 are mirror images. Thus if an axis is defined by the direction of the flow of fluid as the fluid leaves the fluid outlet gap 108, the inner surface 136 on one side of the axis is typically a mirror image of the inner surface 136 on the other side of the axis.

The fluid outlet gap 108 is defined distal to the fluid conduit (e.g., fluid conduit 6) by the convergence of the two halves of the inner surface 134. Pressurized fluid is ejected from the fluid outlet gap 108 and directed towards a belt filter. Adjustment screws 132 or bolts can be used to narrow or widen the fluid outlet gap 108 to calibrate it to a specified size. Such adjustment can be done for example following manufacturing to ensure that the fluid outlet gap 108 is consistent along the length of the blow-off device 102, or to control flow volume and pressure. In addition, it will be appreciated that the adjustment screws 132 eliminate the requirement of the structural ribs 30 in the prior art (see e.g., Figure 4B).

In one embodiment, the width of the fluid outlet gap 108 is in the range of 0.2 mm to 1.0 mm. In another embodiment the width of the fluid outlet gap 108 is in the range of 0.3 mm to 0.7 mm. In a preferred embodiment the width of the fluid outlet gap 108 is in the range of 0.4 mm to 0.5 mm. In an especially preferred embodiment the width of the fluid outlet gap 108 is 0.45 mm.

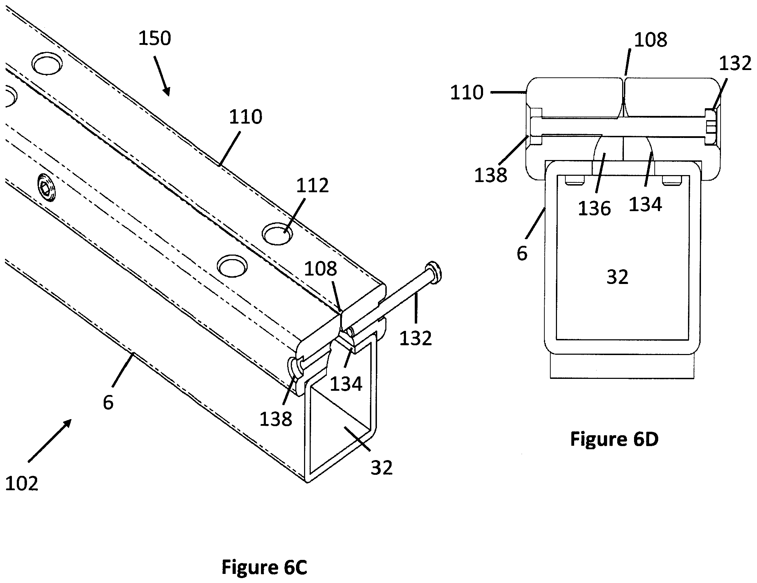

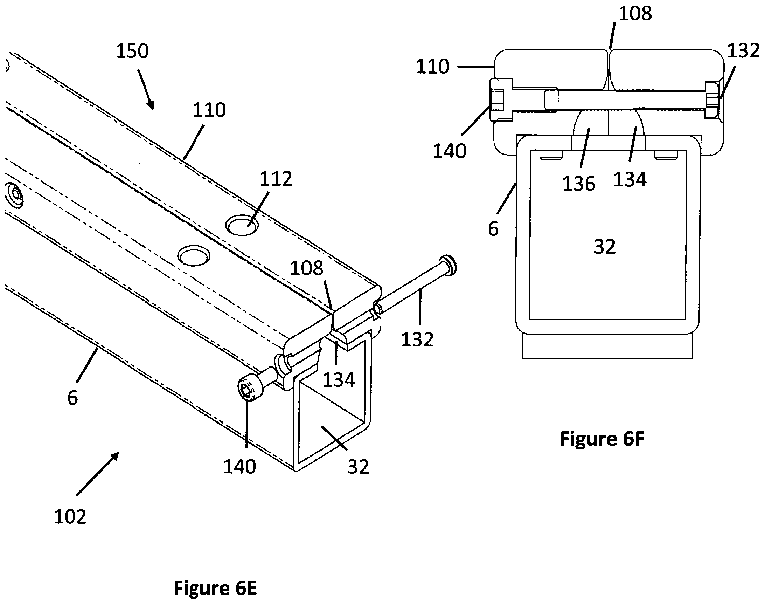

Calibration of adjustment screws 132 to widen or narrow the fluid outlet gap 108 can be by any means known in the art. For example, one type of adjustment screw 132 can be used to narrow the fluid outlet gap 108 while another type can be used to widen the fluid outlet gap 108. Figures 6C and 6D show an embodiment wherein an adjustment screw 132 is used to narrow the fluid outlet gap 108 by inserting the adjustment screw 132 through a pre-formed hole on one side of the fluid outlet gap 108 and tightening it into a threaded hole 138 on the opposing side. By tightening the adjustment screw 132 the two sides of the gap are pulled together. Figures 6E and 6F show an embodiment wherein an adjustment screw is used to widen the fluid outlet gap 108. To widen the fluid outlet gap 108 an adjustment screw 132 is threaded to one side of the fluid outlet gap 108 such that the distal end of the adjustment screw 132 pushes on a stop bolt 140 fitted into the opposite side of the fluid outlet gap 108. As the adjustment screw 132 is tightened the distal end of the adjustment screw 132 pushes on the stop bolt 140 and widens the fluid output gap 108.

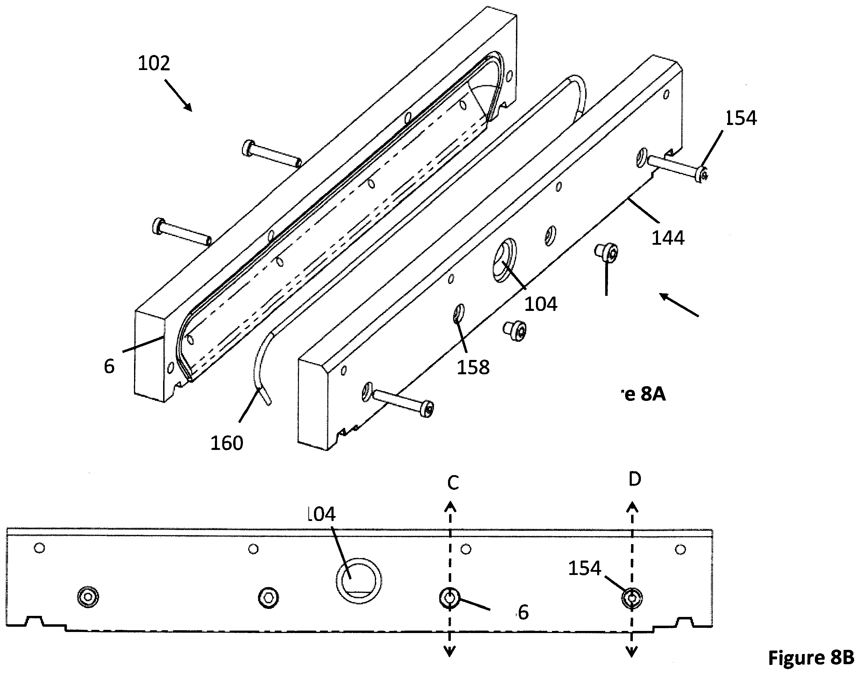

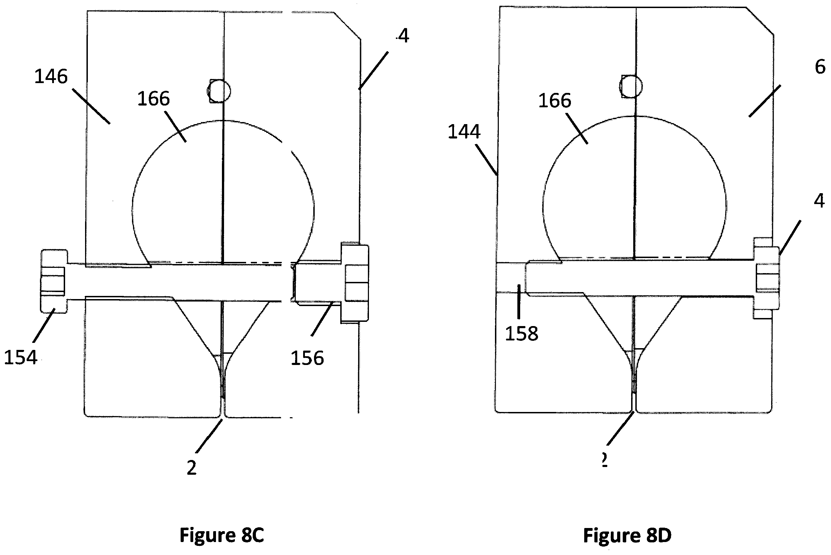

Referring to Figures 7 and 8, shown is another embodiment of a blow-off device 102 comprising a housing 144 defining both the fluid conduit 146 and a fluid outlet nozzle having a fluid outlet gap 152. In some embodiments the housing 144 can be structurally supported by braces 142. The blow-off device 102 can be connected via the fluid inlet 104 to a pressurized fluid source (not shown).

The housing 144 of the blow-off device 102 comprises a streamlined inner surface 148 which in cross-section is in the shape of a teardrop (see Figure 7B and Figure 8). In operation fluid from a fluid source is received by a channel 166 formed by the fluid conduit 146 portion of the housing 144. The inner surface 148 of the housing 144 is continuously curved and defines the channel 166 within the conduit 146 as well as the fluid outlet gap 152. As a result, once having entered the channel 166, the fluid can be directly expelled through the fluid outlet gap 152. In this way a smooth inner surface 148 is provided, removing all flow obstructions or angles in order to provide a streamlined path for the fluid to flow to the fluid outlet gap 152, which directs the fluid towards a belt filter. Typically the shape of the inner surface 148 is the same on either side of the gap, such that the two halves of the inner surface 136 are substantial mirror images of one another about an axis defined by the direction of the flow of fluid as the fluid leaves the fluid outlet gap 152.

Similar to the fluid outlet gap 108 of the previously described fluid outlet nozzle 150, the width of the fluid outlet gap 152 of a blow-off device 102 having a housing with a teardrop-shaped inner surface can be adjusted to be narrower or wider. In one embodiment, the width of the fluid outlet gap 152 is in the range of 0.2 mm to 1.0 mm. In another embodiment the width of the fluid outlet gap 152 is in the range of 0.3 mm to 0.7 mm. In a preferred embodiment the width of the fluid outlet gap 152 is in the range of 0.4 mm to 0.5 mm. In an especially preferred embodiment the width of the fluid outlet gap 152 is 0.45 mm.

Referring to Figure 8, adjustment screws 154 are provided for widening and/or narrowing the fluid outlet gap 152. In this embodiment the fluid conduit 146 is made of two separate pieces (i.e., the conduit 146 is bipartite) separated by a gasket 160. Two embodiments of adjusting mechanisms used to adjust the width of the fluid outlet gap 152 are shown in Figures 8C and 8D. In Figure 8D, an adjustment screw 154 (which can also be a bolt) is used to narrow the width of the fluid outlet gap 152 by inserting the adjustment screw 154 into a pre-formed hole in one half of the bipartite housing 144 and tightening the adjustment screw 154 into a corresponding threaded hole 158 in the other half of the housing 144. Tightening of the adjustment screw 154 into the threads of the threaded hole 158 causes the two halves of the housing 144 to be pulled closer to one another resulting in the narrowing of the fluid outlet gap 152. In Figure 8C, an adjustment screw 154 is used together with a stop bolt 156 to widen the width of the fluid outlet gap 152. Here the insertion and tightening of the adjustment screw 154 in the pre-formed hole pushes against the stop bolt 156, causing the two halves of the housing 144 to separate at the position of the fluid outlet gap 152, causing the fluid outlet gap 152 to widen.

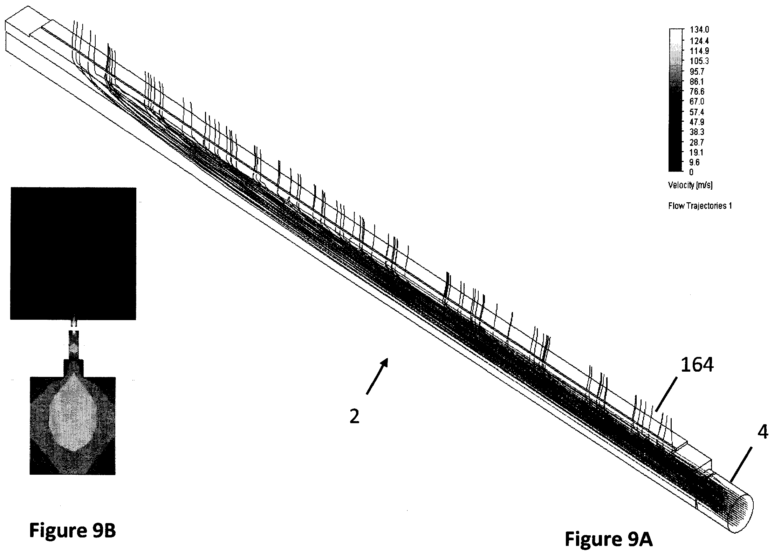

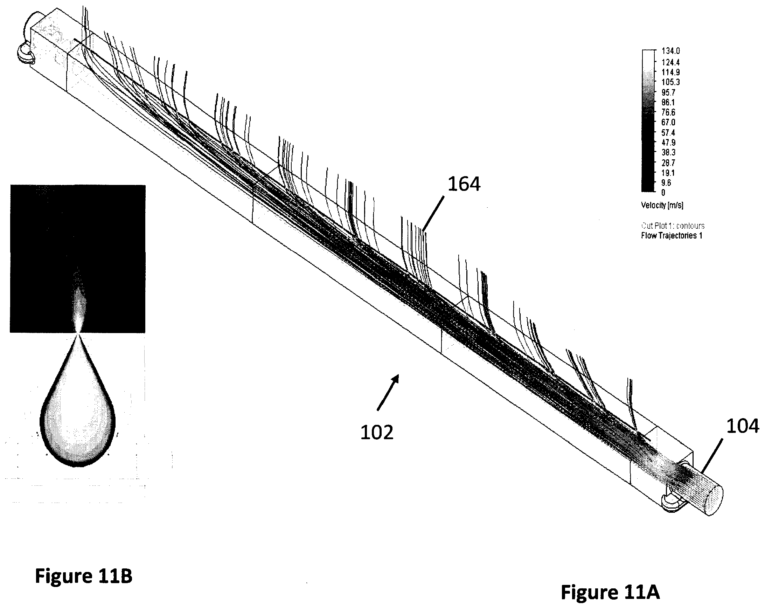

Figures 9 to 11 illustrate the results of the CFD-modelled velocity profile for a blow-off device 2 known in the art (Figure 9), a blow-off device 102 comprising a fluid outlet nozzle 150 with a housing 110 having a streamlined inner surface 134 (Figure 10), and a blow-off device 102 having a housing 144 which in cross-section is teardrop-shaped (Figure 11). The models were created using the same inlet fluid flow rate. Figures 9A, 10A, and 11A show the cut-away of the velocity profile along the length of the known blow-off device 2 and the blow-off devices 102 according to the invention, while Figures 9B, 10B, and 11B show the cross-section through the blow-off devices 2, 102. The cross-sectional view clearly shows that the velocity of the fluid jet 164 exiting the blow-off devices 102 with streamlined inner surfaces (Figures 10 and 11) is maintained for a greater distance than that of fluid exiting the blow-off device 2 known from the prior art. This demonstrates greater strength of the fluid jet 164 in the embodiments according to the invention and therefore a greater potential for debris removal when the same inlet fluid pressure is used. Further, the velocity profile in Figure 9A of the known blow-off device 2 shows that the fluid jets 164 are in line with, or directly above, the gap. In contrast, Figures 10A and 11A show that the fluid exiting the streamlined blow-off devices 102 has a sinusoidal pattern along the length of the blow-off device 102. This velocity profile likely denotes a movement in the fluid jets 164 along the length of the blow-off device that contributes to improved cleaning potential.

Embodiments of the present invention will be illustrated with reference to the following example, which should not be used to construe or limit the scope of the invention.

### Example

Experimental testing of the blow-off devices was performed with the device installed in a Salsnes SF6000 unit using a Kaiser blower equipped with a variable frequency drive (VFD):
Blow-off Devices Tested:
   - V0 - Prior Art (prior design, per Figure 1A)
   - VI - Streamlined Outlet Nozzle (streamlined nozzle design, per Figure 5A)
Kaiser model BB 68C (OMEGA 22 PLUS)
   - Max power rating 7.5 kW
   - Max pressure (7.5kW motor) = 530mbar
   - Max flow (at 530mbar) = 5.56 m3/min (333.6 m^3/hr)
   - Blower speed (at 60hz x 5:3 pulley ratio)= 5,820 rpm
   - VFD used to vary blower motor speed
   - Tests performed at blower motor speeds: 60, 50, 40, 30, 20 and 15 Hz
Salsnes SF6000 Setup:
   - blow-off unit mounted within the SF6000 unit and positioned normal to the filter mesh;
   - a 350 micron filter mesh was installed on rollers to to produce a continuous moving loop;
   - filter mesh was running at 60 Hz roller speed on 150mm diameter rollers;
   - the filter mesh was partially immersed in clean potable water to keep the filter mesh lubricated;
   - test setup was warmed up for at least 2hrs before readings were taken; and
   - 6 readings recorded at each blower motor speed setting; 60, 50, 40, 30, 20, 15 Hz + 5 repeats at 60 Hz.
Instrumentation:
   - Candura Electrical Power Analyzer; used to measure total input electrical power to blower motor;
   - Pitot Tube inserted in feed line between blower and blow-off device to measure Air Velocity and Flow Rate using static and stagnation pressures;
   - pressure Sensor just upstream of blow-off unit to measure inlet static air pressure
   - pemperature Sensors used Inlet air, air knife, inside SF unit and ambient); and
   - humidity and Dew Point meters; used to gauge conditions/properties of ambient air.
Analysis Methodology:
   - 6 readings at each blower speed setting were averaged to produce an average data sets as a function of blower speed for each blow-off device tested.
   - Parameters measured were used to determine, air velocity, temperature and pressure both upstream and downstream of the blow-off device.
   - Flow rate and hydraulic loss at standard temperature and pressure (STP) were calculated from the measured parameters.
   - This then allowed key Performance Metrics to be computed:
      ∘ Power Loss (friction loss);
      ∘ Power Delivered (i.e., cleaning power); and
      ∘ Power Consumed (friction loss + cleaning power).
   - The key Performance Metrics were then compared for both V0 and V1 blow-off devices.
   - Summary of results are shown in Tables 1 and 2 [V0 = prior art device/blow-off device 2 and VI = streamlined outlet device/blow-off device 102].

Tables 1 and 2 provide the experimental data (Table 1 - measured results and Table 2 - performance metrics) collected from testing the flow characteristics of the blow-off device 2 known in the art and the blow-off devices 102 with streamlined inner surfaces according to the invention. Measured temperature of the blow-off devices 2, 102 is shown in column 4 of Table 1 and pressure drop across the blow-off device 2, 102 is shown in columns 7 of Table 1. Both temperature and pressure drop are reduced in the streamlined designs indicating lower frictional losses. Column 13 of Table 1 is indicative of an increased exit velocity for the streamlined design, while column 15 shows a reduction in the hydraulic resistance co-efficient of 52% at the 60 Hz blower speed, indicating that the fluid is moving more freely through the device with a reduction in losses of momentum and mechanical energy as compared to the known device of the prior art.

**Table 1. Experimental data: measured results**

| **Measured Data - Results Summary (Average of 6 Readings for each Run)** | | | | | | | | | | | | | | |
|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 |
| Blow-off Device, Run # | Blower Motor Speed | Total Electrical Power | Blow Off body temp | Pitot Tube air temp | Amb Temp | Displayed Panel Pressure (meas) | Flow Rate (from Pitot Tube meas) | Mass Flow Rate | Air Density (based on Ideal Gas Law) | Air Kinematic Viscosity (Ref at 50C) | Inlet Reynolds No. | Blow-off Device Exit Velocity | Outlet Reynolds No. | Hydraulic Resistance Coefficient |
| | Sp | Ptot | T1 | T2 | Tamb | Δp | Q | m | p | v(ref) | Re_in = dinVin/v(T) | Vk | Re_k = Dh(Vk)/v(T) | K = Δp/(pVin^2/2) |
| | [Hz] | [kW] | [deg C] | [deg C] | [deg C] | [mbar] | [m^3/hr] | [kg/hr] | [kg/m^3] | [m^2/s] | | [m/s] | | |
| **Version 0 Prior Art** | | | | | | | | | | | | | | |
| Run 1 | 60 | 5.65 | 41.3 | 51.1 | 21 | 246 | 248 | 335 | 1.35 | 1.794E-05 | 1.1E+05 | 109.7 | 5.5E+03 | 16.2 |
| Run 2 | 60 | 5.25 | 48.5 | 57.7 | 22 | 238 | 250 | 329 | 1.31 | 1.794E-05 | 1.1E+05 | 110.6 | 5.5E+03 | 15.8 |
| Run 3 | 60 | 5.43 | 50.3 | 58.7 | 22 | 237 | 253 | 331 | 1.31 | 1.794E-05 | 1.2E+05 | 111.8 | 5.6E+03 | 15.4 |
| Run 4 | 60 | 5.38 | 51.6 | 59.9 | 22.5 | 235 | 253 | 329 | 1.30 | 1.794E-05 | 1.2E+05 | 111.5 | 5.6E+03 | 15.5 |
| Run 5 | 60 | 5.00 | 52.3 | 60.7 | 23 | 233 | 254 | 330 | 1.30 | 1.794E-05 | 1.2E+05 | 112.3 | 5.6E+03 | 15.2 |
| Run 6 | 50 | 3.36 | 46.4 | 52.6 | 22.5 | 167 | 233 | 293 | 1.26 | 1.794E-05 | 1.1E+05 | 102.9 | 5.2E+03 | 13.4 |
| Run 7 | 40 | 1.69 | 43.7 | 43.7 | 22 | 111 | 205 | 253 | 1.23 | 1.794E-05 | 9.4E+04 | 90.7 | 4.5E+03 | 11.7 |
| Run 8 | 30 | 0.43 | 34.6 | 38.4 | 21 | 64 | 169 | 203 | 1.20 | 1.794E-05 | 7.7E+04 | 74.5 | 3.7E+03 | 10.2 |
| Run 9 | 20 | 0.19 | 31.3 | 35.2 | 21 | 28 | 122 | 143 | 1.17 | 1.794E-05 | 5.6E+04 | 53.9 | 2.7E+03 | 8.8 |
| Run 10 | 15 | 0.07 | 29.1 | 33.5 | 20.5 | 16 | 89 | 104 | 1.17 | 1.794E-05 | 4.1E+04 | 39.5 | 2.0E+03 | 10.1 |
| Run 11 | 60 | 5.52 | 49.1 | 57.7 | 21 | 241 | 250 | 330 | 1.32 | 1.794E-05 | 1.1E+05 | 110.5 | 5.5E+03 | 16.0 |

| **Version 1 Streamlined Outlet Nozzle** | | | | | | | | | | | | | | |
|---|---|---|---|---|---|---|---|---|---|---|---|---|---|---|
| Run 1 | 60 | 4.28 | 25.1 | 25.3 | 22 | 147 | 310 | 386 | 1.24 | 1.794E-05 | 1.4E+05 | 136.9 | 6.9E+03 | 6.7 |
| Run 2 | 60 | 4.24 | 40.1 | 50.8 | 23 | 154 | 292 | 365 | 1.25 | 1.794E-05 | 1.3E+05 | 128.8 | 6.5E+03 | 7.9 |
| Run 3 | 60 | 4.22 | 36.2 | 52.1 | 23.5 | 153 | 292 | 364 | 1.25 | 1.794E-05 | 1.3E+05 | 129.1 | 6.5E+03 | 7.9 |
| Run 4 | 60 | 4.37 | 40.6 | 52.9 | 26 | 153 | 292 | 362 | 1.24 | 1.794E-05 | 1.3E+05 | 128.8 | 6.5E+03 | 7.9 |
| Run 5 | 60 | 4.52 | 41.2 | 53.3 | 23 | 152 | 298 | 370 | 1.24 | 1.794E-05 | 1.4E+05 | 131.6 | 6.6E+03 | 7.5 |
| Run 6 | 50 | 2.57 | 37.7 | 46.6 | 21.5 | 108 | 268 | 326 | 1.22 | 1.794E-05 | 1.2E+05 | 118.2 | 5.9E+03 | 6.8 |
| Run 7 | 40 | 1.37 | 33.5 | 40.5 | 20 | 71 | 226 | 271 | 1.20 | 1.794E-05 | 1.0E+05 | 99.6 | 5.0E+03 | 6.4 |
| Run 8 | 30 | 0.58 | 30.6 | 36.1 | 19 | 42 | 176 | 209 | 1.19 | 1.794E-05 | 8.1E+04 | 77.8 | 3.9E+03 | 6.2 |
| Run 9 | 20 | 0.37 | 29 | 33.7 | 18.5 | 20 | 119 | 140 | 1.17 | 1.794E-05 | 5.5E+04 | 52.7 | 2.6E+03 | 6.6 |
| Run 10 | 15 | 0.22 | 26.3 | 31.9 | 18 | 12 | 94 | 110 | 1.17 | 1.794E-05 | 4.3E+04 | 41.6 | 2.1E+03 | 6.5 |
| Run 11 | 60 | 4.50 | 37.3 | 50 | 18 | 153 | 298 | 373 | 1.25 | 1.794E-05 | 1.4E+05 | 131.4 | 6.6E+03 | 7.5 |

| **Percent Change, (V1/V0-1)** | | | | | | | | | | | | | | |
|---|---|---|---|---|---|---|---|---|---|---|---|---|---|---|
| Only 60 Hz Data | | **-19%** | -25% | **-18%** | 3% | **-36%** | **18%** | **12%** | -5% | 0% | 18% | **18%** | **18%** | **-52%** |
| All Data | | -**18%** | **-21%** | **-14%** | **-3%** | **-36%** | **14%** | **10%** | -4% | 0% | 14% | **14%** | **14%** | **-47%** |

**Table 2. Experimental data: performance metrics**

| **Performance Metrics** | | | | | | |
|---|---|---|---|---|---|---|
| Blow-off Device, Run # | Blower Motor Speed | Power Loss (friction loss) | Dynamic Pressure of Fluid Jet | Total Force of Fluid Jet | Power Delivered by Fluid Jet | Total Power Consumed |
| | Sp | PL = ΔpQ | pdyn = 1/2p(Vk)^2 | F= pdynA | Pair = F Vk | Pt = PL+Pair |
| | [Hz] | [kW] | [Pa] | [N] | [kW] | [kW] |
| **Version 0 Prior Art** | | | | | | |
| Run 1 | 60 | 1.70 | 8113 | 5.10 | 0.56 | 2.26 |
| Run 2 | 60 | 1.66 | 8032 | 5.05 | 0.56 | 2.21 |
| Run 3 | 60 | 1.67 | 8178 | 5.14 | 0.58 | 2.24 |
| Run 4 | 60 | 1.65 | 8097 | 5.09 | 0.57 | 2.22 |
| Run 5 | 60 | 1.65 | 8175 | 5.14 | 0.58 | 2.22 |
| Run 6 | 50 | 1.08 | 6669 | 4.20 | 0.43 | 1.51 |
| Run 7 | 40 | 0.63 | 5070 | 3.19 | 0.29 | 0.92 |
| Run 8 | 30 | 0.30 | 3335 | 2.10 | 0.16 | 0.46 |
| Run 9 | 20 | 0.10 | 1713 | 1.08 | 0.06 | 0.15 |
| Run 10 | 15 | 0.04 | 926 | 0.58 | 0.02 | 0.06 |
| Run 11 | 60 | 1.68 | 8047 | 5.06 | 0.56 | 2.24 |

| **Version 1 Streamlined Outlet Nozzle** | | | | | | |
|---|---|---|---|---|---|---|
| Run 1 | 60 | 1.27 | 11665 | 7.34 | 1.00 | 2.27 |
| Run 2 | 60 | 1.25 | 10384 | 6.53 | 0.84 | 2.09 |
| Run 3 | 60 | 1.24 | 10384 | 6.53 | 0.84 | 2.09 |
| Run 4 | 60 | 1.24 | 10300 | 6.48 | 0.83 | 2.07 |
| Run 5 | 60 | 1.26 | 10741 | 6.76 | 0.89 | 2.15 |
| Run 6 | 50 | 0.80 | 8506 | 5.35 | 0.63 | 1.44 |
| Run 7 | 40 | 0.44 | 5956 | 3.75 | 0.37 | 0.82 |
| Run 8 | 30 | 0.21 | 3591 | 2.26 | 0.18 | 0.38 |
| Run 9 | 20 | 0.07 | 1632 | 1.03 | 0.05 | 0.12 |
| Run 10 | 15 | 0.03 | 1016 | 0.64 | 0.03 | 0.06 |
| Run 11 | 60 | 1.26 | 10820 | 6.81 | 0.89 | 2.16 |

| **Percent Change, (V1/V0-1)** | | | | | | |
|---|---|---|---|---|---|---|
| Only 60 Hz Data | | **-25%** | **32%** | **32%** | **56%** | **-4%** |
| All Data | | **-25%** | **28%** | **28%** | **51%** | **-5%** |

## Claims

1. A fluid outlet nozzle (150) connectable to a conduit (6) of a blow-off device (102) for cleaning a belt filter, the nozzle comprising a housing (110) having an inner surface (134) and outer surface, wherein the inner surface defines a fluid entry zone to receive fluid into the nozzle (150) and an elongated gap (108) for directing fluid towards the belt, wherein the inner surface (134) is streamlined to facilitate flow of the fluid into the gap (108) and wherein the inner surface is constructed of a continuously curving surface having a concave portion and a convex portion.

2. The nozzle (150) defined in claim 1, wherein the housing (110) is bipartite.

3. The nozzle (150) defined in any one of claims 1-2, wherein the width of the gap (108) is adjustable.

4. The nozzle (150) defined in claim 3, wherein the adjustment comprises narrowing the width of the gap (108).

5. The nozzle (150) defined in claim 3, wherein the adjustment comprises widening the width of the gap (108).

6. The nozzle (150) defined in any one of claims 3-5, wherein an adjustment screw (132) is used to adjust the width of the gap.

7. The nozzle (150) defined in any one of claims 1-6, wherein the width of the gap (108) is in the range of 0.2 mm to 1.0 mm.

8. The nozzle (150) defined in any one of claims 1-7 coupled to a conduit (6) of a blow-off device (102) for cleaning a belt filter.

9. The nozzle (150) defined in claim 8, wherein the conduit (6) comprises one or more fluid inlets which receive pressurized fluid from a fluid source.

10. The nozzle (150) defined in any one of claims 1-9, wherein the conduit (6) varies in cross.sectional area between a first end and a second end of the conduit.

11. The nozzle (150) defined in any one of claims 1-10 wherein the direction of the flow of fluid as the fluid exits the elongated gap (108) defines an axis, and, wherein the inner surface (134) on one side of the axis is a mirror image of the inner surface on the other side of the axis.

12. The nozzle (150) defined in any one of claims 1-11 used to clean a belt filter.

13. A method of cleaning a belt filter using a blow-off device (102) comprising a housing (110) having an outer surface and a streamlined inner surface (134) constructed of a continuously curving surface having a concave portion and a convex portion, the method comprising:
receiving pressurized fluid into a channel defined by a conduit (6) of the blow-off device (102);
moving the fluid past the streamlined inner surface (134) constructed of a continuously curving surface having a concave portion and a convex portion; and
ejecting the fluid towards the belt filter from an elongated gap (108) defined by the streamlined inner surface (134) constructed of a continuously curving surface having a concave portion and a convex portion.

## Patentansprüche

1. Fluidauslassdüse (150), die mit einer Leitung (6) einer Abblasvorrichtung (102) zum Reinigen eines Bandfilters verbunden werden kann, wobei die Düse ein Gehäuse (110) mit einer Innenfläche (134) und einer Außenfläche umfasst, wobei die Innenfläche eine Fluideintrittszone zur Aufnahme von Fluid in die Düse (150) und einen länglichen Spalt (108) zum Leiten von Fluid zum Band hin definiert, wobei die Innenfläche (134) stromlinienförmig ist, um den Fluss des Fluids in den Spalt (108) zu erleichtern, und wobei die Innenfläche aus einer kontinuierlich gekrümmten Oberfläche mit einem konkaven Abschnitt und einem konvexen Abschnitt aufgebaut ist.

2. Düse (150) nach Anspruch 1, wobei das Gehäuse (110) zweiteilig ist.

3. Düse (150) nach einem der Ansprüche 1-2, wobei die Breite des Spaltes (108) einstellbar ist.

4. Düse (150) nach Anspruch 3, wobei die Einstellung eine Verengung der Breite des Spaltes (108) umfasst.

5. Düse (150) nach Anspruch 3, wobei die Einstellung eine Erweiterung der Spaltbreite (108) umfasst.

6. Düse (150) nach einem der Ansprüche 3-5, wobei eine Einstellschraube (132) zur Einstellung der Spaltbreite verwendet wird.

7. Düse (150) nach einem der Ansprüche 1-6, wobei die Breite des Spaltes (108) im Bereich von 0,2 mm bis 1,0 mm liegt.

8. Düse (150) nach einem der Ansprüche 1-7, die mit einer Leitung (6) einer Abblasvorrichtung (102) zur Reinigung eines Bandfilters verbunden ist.

9. Düse (150) nach Anspruch 8, wobei die Leitung (6) einen oder mehrere Fluideinlässe umfasst, die unter Druck stehendes Fluid von einer Fluidquelle erhalten.

10. Düse (150) nach einem der Ansprüche 1-9, wobei die Leitung (6) in der Querschnittsfläche zwischen einem ersten Ende und einem zweiten Ende der Leitung variiert.

11. Düse (150) nach einem der Ansprüche 1-10, wobei die Richtung des Fluidstroms beim Austritt des Fluids aus dem länglichen Spalt (108) eine Achse definiert, und wobei die Innenfläche (134) auf einer Seite der Achse ein Spiegelbild der Innenfläche auf der anderen Seite der Achse ist.

12. Düse (150) nach einem der Ansprüche 1-11, die zur Reinigung eines Bandfilters verwendet wird.

13. Verfahren zum Reinigen eines Bandfilters unter Verwendung einer Abblasvorrichtung (102), die ein Gehäuse (110) mit einer Außenfläche und einer stromlinienförmigen Innenfläche (134) umfasst, die aus einer kontinuierlich gekrümmten Fläche mit einem konkaven und einem konvexen Abschnitt besteht, wobei das Verfahren umfasst:
Aufnahme von unter Druck stehendem Fluid in einen durch eine Leitung (6) der Abblasvorrichtung (102) definierten Kanal;
Bewegen der Flüssigkeit an der stromlinienförmigen Innenfläche (134) vorbei, die aus einer kontinuierlich gekrümmten Oberfläche mit einem konkaven Abschnitt und einem konvexen Abschnitt besteht; und
Ausstoßen des Fluids aus einem länglichen Spalt (108), der durch die stromlinienförmige innere Oberfläche (134) definiert ist, die aus einer kontinuierlich gekrümmten Oberfläche mit einem konkaven Abschnitt und einem konvexen Abschnitt besteht, zum Bandfilter hin.

## Revendications

1. Buse de sortie de fluide (150) pouvant être connectée à un conduit (6) d'un dispositif de soufflage (102) pour nettoyer un filtre à bande, la buse comprenant un boîtier (110) ayant une surface intérieure (134) et une surface extérieure, dans laquelle la surface intérieure définit une zone d'entrée de fluide pour recevoir du fluide dans la buse (150) et un espace allongé (108) pour diriger le fluide vers la courroie, dans laquelle la surface intérieure (134) est profilée pour faciliter l'écoulement du fluide dans l'espace (108) et dans laquelle la surface intérieure est formée d'une surface incurvée en continu ayant une partie concave et une partie convexe.

2. Buse (150) définie dans la revendication 1, dans laquelle le boîtier (110) est bipartite.

3. Buse (150) définie dans l'une quelconque des revendications 1 à 2, dans laquelle la largeur de l'espace (108) est ajustable.

4. Buse (150) définie dans la revendication 3, dans laquelle l'ajustement comprend le rétrécissement de la largeur de l'espace (108).

5. Buse (150) définie dans la revendication 3, dans laquelle l'ajustement comprend l'élargissement de la largeur de l'espace (108).

6. Buse (150) définie dans l'une quelconque des revendications 3 à 5, dans laquelle une vis de réglage (132) est utilisée pour ajuster la largeur de l'espace.

7. Buse (150) définie dans l'une quelconque des revendications 1 à 6, dans laquelle la largeur de l'espace (108) est dans la plage de 0,2 mm à 1,0 mm.

8. Buse (150) définie dans l'une quelconque des revendications 1 à 7 couplée à un conduit (6) d'un dispositif de soufflage (102) pour nettoyer un filtre à bande.

9. Buse (150) définie dans la revendication 8, dans laquelle le conduit (6) comprend une ou plusieurs entrées de fluide qui reçoivent du fluide sous pression d'une source de fluide.

10. Buse (150) définie dans l'une quelconque des revendications 1 à 9, dans laquelle le conduit (6) varie en section transversale entre une première extrémité et une seconde extrémité du conduit.

11. Buse (150) définie dans l'une quelconque des revendications 1 à 10, dans laquelle la direction de l'écoulement de fluide lorsque le fluide sort de l'espace allongé (108) définit un axe, et, dans lequel la surface intérieure (134) sur un côté de l'axe est une image miroir de la surface intérieure de l'autre côté de l'axe.

12. Buse (150) définie dans l'une quelconque des revendications 1 à 11, utilisée pour nettoyer un filtre à bande.

13. Procédé de nettoyage d'un filtre à bande utilisant un dispositif de soufflage (102) comprenant un boîtier (110) ayant une surface extérieure et une surface intérieure (134) profilée formée d'une surface incurvée en continu ayant une partie concave et une partie convexe, le procédé comprenant :
recevoir un fluide sous pression dans un canal défini par un conduit (6) du dispositif de soufflage (102);
déplacer le fluide au-delà de la surface intérieure (134) profilée formée d'une surface incurvée en continu ayant une partie concave et une partie convexe; et
éjecter le fluide vers le filtre à bande à partir d'un espace allongé (108) défini par la surface intérieure (134) profilée formée d'une surface incurvée en continu ayant une partie concave et une partie convexe.
